# FASCICULE DE BREVET EUROPEEN

(11) **EP 0 652 331 B1**
(45) Date de publication et mention de la délivrance du brevet: **18.03.1998**
(21) Numéro de dépôt: 94402523.8
(22) Date de dépôt: 08.11.1994
(51) Int. Cl.: E04B 1/86, B32B 15/12

(54) **Panneau absorbant acoustique**
Schalldämmende Platte
Sound absorbing panel

(30) Priorité: 08.11.1993 FR 9313290
(43) Date de publication de la demande: 10.05.1995
(73) Titulaire: ISOVER SAINT-GOBAIN, F-92400 Courbevoie (FR)
(72) Inventeur: Zinzius, Roger, F-71640 Givry (FR); Bourdon, Eric, F-78290 Croissy sur Seine (FR); Rias, Jean-Claude, F-78670 Villenne sur Seine (FR)
(74) Mandataire: Muller, René

(56) Documents cités:
- CH-A- 287 796
- FR-A- 2 150 611
- FR-A- 2 321 020
- FR-A- 2 683 612
- DATABASE WPI Week 8020, Derwent Publications Ltd., London, GB; AN 80-35822C & JP-B-55 014 835 (ASAHI FIBER GLASS KK) 19 Avril 1980
- DATABASE WPI Week 8109, Derwent Publications Ltd., London, GB; AN 81-14533D & JP-A-55 164 150 (ASAHI FIBER GLASS KK) 21 Décembre 1980

## Description

L'invention concerne les panneaux absorbants acoustiques destinés à équiper les parois d'un local pour en abaisser le temps de réverbération et plus particulièrement ceux à base de matelas de laine de fibres minérales.

Dans les locaux bruyants, il est habituel d'équiper les parois de matériaux absorbants acoustiques destinés à maîtriser la propagation sonore dans le local pour diminuer le niveau sonore et améliorer les qualités d'écoute. On utilise en général comme matériau absorbant acoustique, un matériau souvent également utilisé pour ses qualités d'isolant acoustique qui va permettre à l'onde sonore qui l'atteint de se dissiper dans son épaisseur. On utilise ainsi des isolants fibreux, en particulier des matelas de laine de fibres minérales.

Le principe de l'absorption acoustique impose que l'onde sonore incidente puisse atteindre le matériau absorbant mais, pour de multiples raisons, il est pratiquement impossible de laisser le matériau absorbant acoustique apparent : il est trop fragile, sa surface est très salissante et son aspect, lorsqu'il est brut, inesthétique. Il est indispensable dans la plupart des applications de recouvrir l'absorbant acoustique, d'un parement qui le protège et donne au panneau l'aspect souhaité. Le problème est d'obtenir un produit satisfaisant sur le plan esthétique qui garde les qualités d'absorption acoustique du panneau nu.

Les produits développés antérieurement pour traiter les parois d'un local en y installant des panneaux destinés à amortir les ondes sonores incidentes utilisent deux principes très différents. Ou bien il s'agit de résonateurs d'Helmholtz, c'est-à-dire de cavités multiples réalisées dans l'épaisseur du panneau dont le volume est calculé pour les accorder sur certaines gammes de fréquence et qui sont protégées par un parement poreux, ou bien on utilise un autre principe et il s'agit d'absorption simple dans un matériau, en général fibreux, lui aussi protégé par une paroi adéquate.

Le brevet DE-PS-36 43 481 décrit ainsi un réseau de lattes de bois ou de métal formant un caillebotis, dont les creux constituent les résonateurs d'Helmholtz. Sur ce réseau est installée une plaque de plâtre percée de trous qui occupent une part importante de la surface. La plaque est elle-même recouverte d'une couche poreuse sur laquelle on a placé un revêtement en papier à tapisser percé de trous d'un diamètre compris entre 0,1 et 2 mm qui occupent une surface cumulée de l'ordre de 0,5 % de l'ensemble. Les résonateurs constituant une solution acoustique très différente de l'absorption pure telle qu'elle est réalisée dans les matériaux fibreux, l'enseignement de DE-PS-36 43 481 ne peut être transposé aux panneaux constitués exclusivement de matériaux fibreux.

En revanche, la demande de brevet FR-A-2 611 776 décrit un panneau d'absorption acoustique en laine de roche. Il est recouvert d'une tôle métallique d'une épaisseur supérieure à 0,5 mm équipée de trous possédant une collerette cylindrique à leur périphérie. Les trous ont un diamètre inférieur à 2 mm et occupent ensemble environ la moitié de la surface. Même si les performances acoustiques d'un tel produit étaient satisfaisantes sa technique de fabrication est difficilement industrialisable et son utilisation délicate car ses dimensions ne peuvent s'adapter aux besoins du chantier.

Le brevet US 4 441 580 décrit également un panneau absorbant acoustique comportant une couche épaisse d'une vingtaine de millimètres faite d'un matelas fibreux, d'une masse volumique comprise entre 8 et 50 kg/m³ et recouvert d'un matériau de densité supérieure (100 à 200 kg/m³) d'une épaisseur de 6 mm lui-même recouvert d'un mat de fibres, tous deux étant perforés avec des trous d'un diamètre de 1,5 à 4,5 mm qui occupent ensemble une portion de la surface de l'ordre de 5 %.

On connaît de FR-A-2 150 611 un panneau d'isolation thermique et phonique dont l'absorbant est à base de laine de fibres minérales, comprenant une nappe d'absorption phonique et d'isolation thermique, accollée à une couche de matériau isolant dotée d'un revêtement superficiel et perforée de part en part qui joue le rôle de résonateur d'Helmholz.

Le problème que l'invention cherche à résoudre consiste à fournir un panneau dont l'absorbant est à base de laine de fibres minérales et du type à absorption simple, avec de bonnes performances d'absorption acoustique mais qui soit facile à produire industriellement et qui possède une surface décorative ou au moins, aisée à décorer.

Il s'agit en particulier de permettre d'atteindre des performances pour le coefficient α-Sabine telles qu'il soit au moins égal à 0,75 pour les fréquences de 1000 Hz ou supérieures.

Selon l'invention, ce but est atteint grâce à un panneau d'absorption acoustique dont l'absorbant est à base de laine de fibres minérales et dont la surface comporte un parement perforé et dans lequel les perforations occupent globalement une surface comprise entre 7 et 20 % de la surface du panneau.

Le choix de cette proportion de la surface occupée par les perforations garantit de bonnes performances d'absorption acoustique (α-Sabine d'au moins 0,75 en moyenne pour les hautes fréquences) avec un parement dont la surface est d'un entretien et d'une rénovation faciles.

Toujours pour faciliter cet entretien, le panneau selon l'invention a un parement avec des perforations de surface unitaire comprise entre 3 et 80 mm² et de préférence entre 7 et 30 mm².

Le matériau absorbant donnant de bonnes performances acoustiques est de préférence à base de fibres minérales, il a une masse volumique comprise entre 15 et 200 kg/m³ et, de préférence entre 20 et 60 kg/m³ et une épaisseur comprise entre 10 et 250 mm et, de préférence entre 20 et 100 mm, avec comme choix préféré une masse de l'ordre de 24 kg/m³ et une épaisseur de l'ordre de 50 mm.

C'est ainsi par exemple qu'un panneau en laine de verre du type précédent recouvert d'un parement percé de trous de 5 mm de diamètre régulièrement espacés, avec un pas de 12,5 mm répond parfaitement au problème.

Pour réaliser industriellement un tel panneau, l'invention propose d'utiliser comme parement, un film étanche perforé, en particulier d'une masse surfacique inférieure à 300 g/m² et de préférence comprise entre 80 et 200 g/m². Ce film est avantageusement à base de papier kraft et d'un film d'aluminium.

L'utilisation d'un tel film permet une fabrication en continu qui serait impossible avec un parement rigide.

De préférence, l'absorbant à base de fibres minérales est limité sur au moins l'une de ses faces par un voile de verre et lorsque ce voile de verre est placé entre l'absorbant et le parement perforé alors, le voile de verre a une masse surfacique comprise entre 30 et 90 g/m².

Pour des raisons esthétiques, l'invention propose que dans un panneau d'absorption acoustique dont l'absorbant est à base de laine de fibres minérales et dont la surface comporte des perforations, la surface visible au travers des perforations soit teintée d'une couleur telle qu'elle masque les salissures. De même, elle propose que les trous aient des bords nettement définis.

Ainsi, au cours du temps, un nettoyage de la surface pleine du parement suffit à redonner au panneau son aspect d'origine malgré la poussière qui ne peut manquer de s'accumuler dans les trous.

L'invention propose également que dans le cas d'un panneau rectangulaire, lorsque les perforations forment des alignements rectilignes, ceux-ci fassent avec les côtés du rectangle un angle supérieur à 5°.

Cette orientation améliore la qualité obtenue sur une ligne de production industrielle.

Les figures et la description de l'invention qui suivent permettront d'en comprendre les détails et d'en apprécier les avantages :

Parmi les figures :

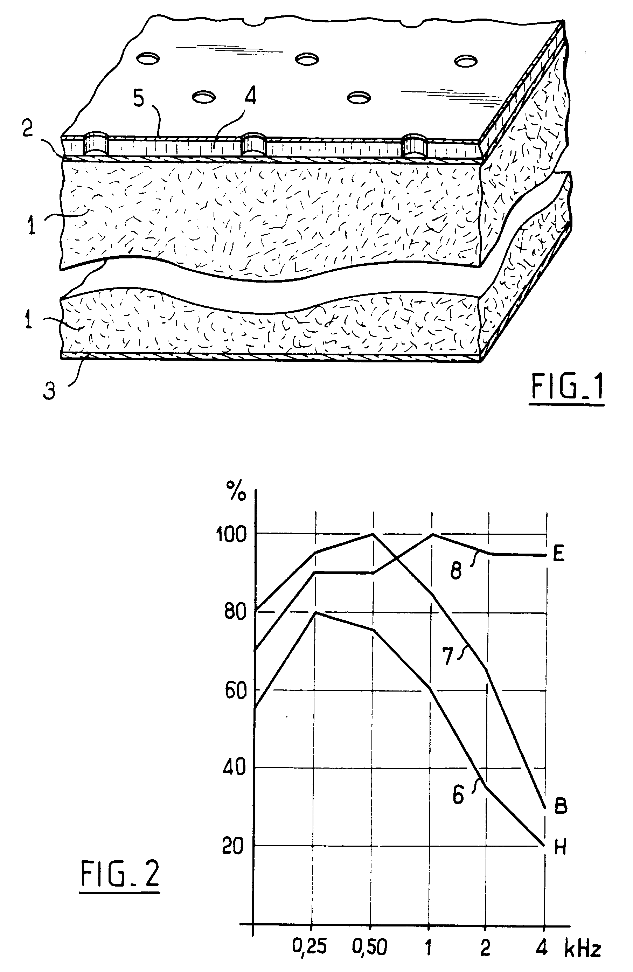

- **la figure 1** représente le produit de l'invention,
- et **la figure 2** montre le coefficient α-Sabine d'un produit conforme à l'invention en comparaison avec deux produits non conformes.

Les principes de la correction acoustique d'un local sont connus. Dans un local fermé, les ondes émises par une source sonore viennent sensibiliser un récepteur (oreille, micro...) par transmissions directes et indirectes, ces dernières étant la conséquence des réflexions sur les parois du local, la superposition de ces ondes différentes entraîne un temps de réverbération plus long ce qui accroît le niveau sonore dans le local et diminue la clarté des sons perçus. L'énergie sonore incidente sur les parois se répartit en énergie transmise au travers de la paroi et en énergie réfléchie. Selon la nature et l'état des surfaces du local, il est possible d'influencer la qualité et le niveau de l'énergie réfléchie et donc l'ambiance sonore.

Les techniques disponibles pour traiter les parois d'un local sont bien connues elles aussi, elles consistent à déposer sur les parois un matériau absorbant acoustique qui grâce à sa nature et à son épaisseur évite à la fois la transmission et la réflexion des ondes sonores. Des panneaux du type précédent sont connus. C'est ainsi par exemple que les demandes de brevet européen EP-A-327 428 ou EP-A-552 573 ou la demande de brevet français FR-A-2 683 612 décrivent des panneaux qui possèdent des propriétés d'absorption acoustique. Ils sont composés dans leur épaisseur d'un matelas de fibres minérales liées par une résine qui constitue l'absorbant acoustique. Ils possèdent au moins une face recouverte d'un voile de verre, généralement obtenu par voie humide et un revêtement superficiel différent selon les cas et adapté aux applications panneau isolant décoratif, panneau résistant au feu ou panneau chauffant, respectivement pour les trois demandes de brevet citées.

Pour mesurer les performances d'absorption acoustique de panneaux du type précédent, on mesure habituellement le "coefficient d'absorption α-Sabine" qui s'évalue en calculant le rapport de l'énergie absorbée et de l'énergie incidente fréquence par fréquence.

D'une manière générale, lorsqu'on recouvre un matelas de laine minérale par un film étanche, même si celui-ci n'est pas rigide, les performances acoustiques se dégradent sensiblement. C'est ainsi qu'un produit tel que l'ACOUSTISHED constitué d'un matelas de fibres de roche, qui est simplement recouvert d'un voile de verre peint a des résultats acoustiques bien meilleurs qu'un produit voisin en laine de verre, le SHEDISOL, qui est lui, recouvert, sur le voile de verre, par un complexe papier kraft - film d'aluminium. En épaisseur 50 mm, les résultats du coefficient α-Sabine en fonction de la fréquence sont les suivants :

| Hz | 125 | 250 | 500 | 1000 | 2000 | 4000 |
|---|---|---|---|---|---|---|
| ACOUSTISHED ® | 0,40 | O,90 | O,85 | O,90 | O,85 | 0,90 |
| SHEDISOL ® | 0,55 | 0,80 | 0,75 | O,60 | O,35 | 0,20 |
| (mesures effectuées sur plenum de 25 cm) | | | | | | |

Il est intéressant de résumer le comportement d'absorption acoustique avec deux nombres, la moyenne globale du coefficient α-Sabine précédent ou la moyenne du même α-Sabine pour les 3 fréquences supérieures (1000, 2000 ou 4000 Hz) dite "moyenne HF".

On obtient :

| | Code produit | Moyenne | Moyenne HF |
|---|---|---|---|
| ACOUSTISHED ® | J | O,80 | 0,88 |
| SHEDISOL ® | H | 0,54 | 0,38 |

Dans le cadre des travaux de l'invention, on a cherché quels types de perçage du complexe papier kraft-aluminium permettent d'obtenir des performances acoustiques satisfaisantes.

### Exemple 1

Un matelas de fibres de verre liées avec une résine, d'une masse volumique de 24 kg/m³ est recouverte sur l'une de ses faces d'un voile de verre de masse surfacique 35 g/m² et sur l'autre, toujours d'un voile de verre, mais d'une masse surfacique de 80 g/m² puis, sur la même face, d'un complexe perforé constitué d'un papier Kraft à 120 g/m² recouvert d'un mince film d'aluminium de 9 µm d'épaisseur.

Les perforations ont été obtenues (avant pose du complexe) par des aiguilles de section rectangulaire qui provoquent des perforations de 0,4 x 3,5 mm. Elles sont disposées régulièrement pour constituer un réseau à mailles carrées de pas 12 mm et occupent ainsi 0,8 % de la surface.

La composition du produit est la même que sur la **figure 1** où l'on voit en 1 le matelas de laine de verre, en 2 et 3 les deux voiles de verre et en 4 le papier Kraft recouvert de son film d'aluminium 5. Le produit ainsi réalisé, avec les perforations des aiguilles a été installé dans un laboratoire d'acoustique, sous la forme d'un panneau de 12 m² placé dans un cadre métallique avec un plenum (un espace) d'air de 25 cm. On a alors mesuré le coefficient α-Sabine pour les fréquences 125, 250, 500, 1000, 2000 et 4000 Hz. La moyenne générale était de 0,78 et la moyenne des trois plus hautes fréquences (HF) de 0,70.

Ces résultats (produit A) figurent avec ceux des autres exemples dans le tableau. Dans ce même tableau, on a également inscrit les résultats des produits extrêmes, Acoustished®, produit J, sans film étanche et Shedisol® produit H, entièrement étanche. Ce dernier produit H a également son coefficient α-Sabine représenté **figure 2**, sur la ligne 6.

### Exemple 2

C'est le produit B, il est identique au produit H à la seule différence près que le parement en papier Kraft-aluminium est perforé. Ici les perforations sont circulaires, réalisées à l'emporte-pièces avec un diamètre de 5,5 mm, elles se trouvent aux noeuds d'un réseau à mailles carrées de pas 28,8 mm dont les diagonales sont parallèles aux bords des panneaux rectangulaires. La surface occupée par les perforations représente 2,9 % du total. Les résultats acoustiques obtenus comme précédemment et qui sont moyens sont représentés **figure 2**.

Malgré la faible surface occupée par les perforations, on constate cependant une nette amélioration par rapport au produit équipé du même parement lorsqu'il est étanche (courbe 6, **figure 2**).

### Exemple 3

Le produit C de cet exemple diffère du produit B de l'exemple précédent par la répartition et le nombre des trous (ils ont le même diamètre). Il s'agit d'un réseau à maille carrée dont les côtés sont parallèles aux bords du panneau et qui a un pas de 20,2 mm, ce qui fournit une surface perforée égale à 5,6 % de l'ensemble.

Les résultats acoustiques (voir tableau) sont nettement améliorés par rapport aux précédents.

### Exemple 4

Ici (produit D) les trous circulaires, avec un diamètre de 5,0 mm occupent une surface totale nettement supérieure (9,7 %). Les trous sont disposés sur des droites qui font avec les grands côtés des rectangles que constituent les panneaux, un angle de 7°, ils sont au pas de 19,8 mm, les droites sont distantes de 20,2 mm. Entre ces droites à égale distance entre elles sont disposées d'autres rangées rectilignes des mêmes trous, avec le même espacement, en quinconce par rapport aux premiers.

Le fait que les rangées de trous ne soient pas exactement parallèles aux côtés du rectangle constituant le panneau - c'est-à-dire à l'axe des lignes de production des matelas de laine de verre - présente un avantage important dans le cas d'une production industrielle. En effet, si au lieu d'avoir choisi un angle de 7°, l'on avait visé le parallélisme entre les rangées de trous et le bord, un écart même minime de ce parallélisme aurait été immédiatement perceptible et aurait pu être considéré comme un défaut. En revanche, avec un angle quelconque, supérieur à 5°, l'oeil est insensible aux légères variations d'alignement par rapport à cette valeur de base. En effet, de tels écarts légers sont impossibles à éviter dans les conditions d'une production industrielle. Il est important d'éviter de les faire apparaître comme l'indice d'une mauvaise qualité.

Dans le produit D qu'on vient de décrire, la surface cumulée des perforations était de 9,7 % de la surface totale. Les résultats acoustiques sont en progrès par rapport à l'échantillon C où la surface occupée par les trous était plus faible.

### Exemple 5

Le produit E, analogue aux précédents possède une surface totale de perforations supérieure, 15 %. Les trous sont circulaires (diamètre = 5 mm). Ils sont alignés avec un pas de 12,5 mm, les rangées se succédant avec un pas de 10,45 mm, les trous étant décalés d'un demi-pas sur deux rangées successives (disposition en quinconce).

Les résultats du produit E sont excellents : nettement meilleurs même que ceux du produit nu (J). Les résultats du coefficient α-Sabine sont représentés **figure 2**.

### Exemple 6

Le produit F comporte des perforations circulaires de 5 mm de diamètre aux noeuds d'un réseau à mailles carrées dont les alignements font avec les bords du panneau un angle de 5°. Le pas des perforations est de 12,9 mm. La surface cumulée des trous occupe 12 % de la surface totale.

Les performances acoustiques sont également meilleures que celles du produit J.

### Exemple 7

Le produit G montre une tentative d'association de trous de tailles différentes, ils sont circulaires, respectivement avec des diamètres de 5 et de 2,8 mm. Ils constituent deux réseaux à mailles carrées de même pas (13,7 mm) imbriqués, chaque trou d'un type donné se trouvant au centre de la maille de l'autre réseau. La surface mise à nu constitue 15,2 % de l'ensemble. Les résultats sont parmi les meilleurs.

**TABLEAU**

| Exemples | Produit | trous mm | surface % | moyenne générale | moyenne HF |
|---|---|---|---|---|---|
| 1 | A | 3,5 x O,4 | O,8 | O,78 | O,70 |
| 2 | B | Ø 5,5 | 2,9 | 0,76 | O,60 |
| 3 | C | Ø 5,3 | 5,6 | O,83 | O,75 |
| 4 | D | Ø 5,0 | 9,7 | O,85 | O,88 |
| 5 | E | Ø 5,O | 15,O | O,90 | O,97 |
| 6 | F | Ø 5,0 | 12,O | 0,86 | O,90 |
| 7 | G | Ø 5,0 | 15,2 | 0,88 | 0,93 |
| | | Ø 2,8 | | | |
| - | H | 0 | O | O,54 | 0,38 |
| - | J | ∞ | 100 | O,80 | O,88 |

L'étude du tableau monte qu'à condition que la surface cumulée des perforations atteigne une proportion de 7 % de la surface, les résultats acoustiques sont bons.

A la suite des essais rapportés dans les exemples précédents, on a vérifié en variant la nature (laine de roche ou bien laine de verre) et la masse volumique (spécialement pour les masses supérieures) que l'effet des perforations était le même que dans le cas de la laine de verre de 24 kg/m³.

Au cours de ces essais, on a étudié la possibilité d'éviter la dégradation apparente des panneaux d'absorption acoustique dont le parement est perforé. Avec les matériaux isolants poreux comme les matelas de laine de verre constituant la base des panneaux concernés, il arrive fréquemment, spécialement lorsque les panneaux sont placés au plafond d'un local, que l'air chargé de poussières diffuse au travers. Dans ce cas, la poussière s'accumule aux endroits où l'air a circulé et laisse des traces foncées. Pour que de tels effets ne soient pas gênants, l'invention propose plusieurs mesures utilisables seules ou en combinaison. Il est tout d'abord proposé que les perforations soient des trous avec des bords nettement définis. Ceci permet de faire apparaître les endroits sales, c'est-à-dire les perforations, comme des motifs gris ou beige délibérément dessinés pour obtenir l'impression produite. De plus, les trous étant disposés de façon géométrique et régulière, l'aspect esthétique du panneau n'est pas substantiellement affecté par l'encrassement. Par ailleurs, comme l'ont montré les essais acoustiques il n'est pas utile d'accroître beaucoup la surface globale des perforations, et les produits selon l'invention ne présentent donc comme surface encrassée que celle correspondant à la perforation, soit au plus 20 %. D'une manière plus générale, pour rendre insensible l'évolution dans le temps du panneau absorbant acoustique dont la surface comporte un parement avec des perforations, on propose de teinter la surface visible au travers des perforations d'une couleur telle qu'elle masque les salissures. On pourra par exemple colorer en gris, le voile de verre au fond des perforations.

Les techniques de l'invention permettent ainsi de disposer d'un produit très efficace comme absorbant acoustique qui est particulièrement adapté à une production industrielle de masse puisque le dépôt du parement perforé sur le panneau peut se faire en continu et que les critères de qualité sont faciles à respecter. Par ailleurs, le fait que l'âge du panneau posé n'en modifie pas l'aspect en simplifie beaucoup l'entretien.

## Revendications

1. Panneau d'absorption acoustique dont l'absorbant (1) est à base de laine de fibres minérales et dont la surface comporte un parement (4, 5) perforé, **caractérisé en ce que** l'absorbant à base de laine de fibres minérales est du type à absorption simple **et en ce que** les perforations occupent globalement une surface comprise entre 7 et 20 % de la surface du panneau.

2. Panneau d'absorption acoustique selon la revendication 1, **caractérisé en ce que** le parement est un film.

3. Panneau d'absorption acoustique selon la revendication 2, **caractérisé en ce que** le parement est un film étanche.

4. Panneau d'absorption acoustique selon la revendication 3, **caractérisée en ce que** le parement a une masse surfacique inférieure à 300 g/m² et de préférence comprise entre 80 et 200 g/m².

5. Panneau d'absorption acoustique selon la revendication 3, **caractérisé en ce que** le film étanche est à base de papier Kraft (4) et d'un film d'aluminium (5).

6. Panneau d'absorption acoustique selon l'une des revendications précédentes, **caractérisé en ce que** les perforations ont une surface unitaire comprise entre 3 et 80 mm² et de préférence entre 7 et 30 mm².

7. Panneau d'absorption acoustique selon l'une des revendications précédentes, **caractérisé en ce que** l'absorbant à base de fibres minérales a une masse volumique comprise entre 15 et 200 kg/m³ et de préférence entre 20 et 60 kg/m³ et une épaisseur comprise entre 10 et 250 mm et de préférence entre 20 et 100 mm.

8. Panneau d'absorption acoustique selon la revendication 7, **caractérisé en ce que** l'absorbant à base de fibres minérales a une masse de l'ordre de 24 kg/m³ et une épaisseur de l'ordre de 50 mm.

9. Panneau d'absorption acoustique selon la revendication 7 ou 8, **caractérisé en ce que** l'absorbant (1) à base de fibres minérales est limité sur au moins l'une de ses faces par un voile de verre (2, 3).

10. Panneau d'absorption acoustique selon la revendication 9, **caractérisé en ce que** le voile de verre (2, 3) a une masse surfacique comprise entre 30 et 90 g/m².

11. Panneau d'absorption acoustique selon l'une des revendications précédentes, **caractérisé en ce que** la surface visible au travers des perforations est teintée en gris ou en une couleur foncée.

12. Panneau d'absorption acoustique selon l'une des revendications précédentes, **caractérisé en ce que** les perforations sont des trous avec des bords nettement définis.

13. Panneau d'absorption acoustique selon l'une des revendications précédentes, **caractérisé en ce qu**'il est rectangulaire **et en ce que**, lorsque les perforations forment des alignements rectilignes, ceux-ci font avec les côtés du rectangle un angle supérieur à 5°.

## Patentansprüche

1. Schalldämmplatte, deren Schallabsorptionsmaterial (1) Mineralfaserwolle zur Grundlage hat und deren Oberfläche eine perforierte Kaschierung (4, 5) umfaßt, **dadurch gekennzeichnet, daß** das Schallabsorptionsmaterial auf der Grundlage von Mineralwolle eine einfache Schallabsorption aufweist **und daß** die Perforation insgesamt eine Fläche von 7 bis 20 % der Oberfläche der Platte einnimmt.

2. Schalldämmplatte nach Anspruch 1, **dadurch gekennzeichnet, daß** die Kaschierung eine Folie ist.

3. Schalldämmplatte nach Anspruch 2, **dadurch gekennzeichnet, daß** die Kaschierung eine Dichtfolie ist.

4. Schalldämmplatte nach Anspruch 3, **dadurch gekennzeichnet, daß** die Kaschierung eine flächenbezogene Masse von unter 300 g/m² und vorzugsweise von 80 bis 200 g/m² besitzt.

5. Schalldämmplatte nach Anspruch 3, **dadurch gekennzeichnet, daß** die Dichtfolie ein Kraft-Papier (4) und eine Aluminiumfolie (5) zur Grundlage hat.

6. Schalldämmplatte nach einem der vorhergehenden Ansprüche, **dadurch gekennzeichnet, daß** die Löcher der Perforation eine einheitliche Fläche von 3 bis 80 mm² und vorzugsweise von 7 bis 30 mm² besitzen.

7. Schalldämmplatte nach einem der vorhergehenden Ansprüche, **dadurch gekennzeichnet, daß** das Schallabsorptionsmaterial auf der Grundlage von Mineralfasern eine Dichte von 15 bis 200 kg/m³ und vorzugsweise 20 bis 60 kg/m³ und eine Dicke von 10 bis 250 mm und vorzugsweise 20 bis 100 mm besitzt.

8. Schalldämmplatte nach Anspruch 7, **dadurch gekennzeichnet, daß** das Schallabsorptionsmaterial auf der Grundlage von Mineralfasern eine Dichte von etwa 24 kg/m³ und eine Dicke von etwa 50 mm besitzt.

9. Schalldämmplatte nach Anspruch 7 oder 8, **dadurch gekennzeichnet, daß** das Schallabsorptionsmaterial (1) auf der Grundlage von Mineralfasern auf wenigstens einer Seite von einem Glasvlies (2, 3) begrenzt wird.

10. Schalldämmplatte nach Anspruch 9, **dadurch gekennzeichnet, daß** das Glasvlies (2, 3) eine flächenbezogene Masse von 30 bis 90 g/m² besitzt.

11. Schalldämmplatte nach einem der vorhergehenden Ansprüche, **dadurch gekennzeichnet, daß** die durch die Löcher sichtbare Oberfläche grau ist oder einen dunklen Farbton hat.

12. Schalldämmplatte nach einem der vorhergehenden Ansprüche, **dadurch gekennzeichnet, daß** die Perforation aus Löchern mit klar begrenzten Rändern besteht.

13. Schalldämmplatte nach einem der vorhergehenden Ansprüche, **dadurch gekennzeichnet, daß** sie rechteckig ist **und daß**, wenn die Perforation in geraden Linien verläuft, diese mit den Seiten des Rechtecks einen Winkel von größer als 5° bilden.

## Claims

1. Sound absorbing panel, the absorbent material (1) of which is based on mineral fibre wool and of which the surface comprises a perforated facing (4, 5), **characterized in that** the mineral fibre wool based absorbent material is of the simple absorbtion type **and in that** the perforations occupy, overall, a surface area of between 7 and 10 % of the surface area of the panel.

2. Sound absorbing panel according to Claim 1, **characterized in that** the facing is a film.

3. Sound absorbing panel according to Claim 2, **characterized in that** the film is a leaktight film.

4. Sound absorbing panel according to Claim 3, **characterized in that** the facing has a surfacic mass of less than 300 g/m² and, preferably, of between 80 and 200 g/m².

5. Sound absorbing panel according to Claim 3, **characterized in that** the leaktight film is based on Kraft paper (4) and on an aluminium film (5).

6. Sound absorbing panel according to any one of the preceding Claims, **characterized in that** the perforations have a unitary area of between 3 and 80 mm² and, preferably, of 7 and 30 mm².

7. Sound absorbing panel according to any one of the preceding Claims, **characterized in that** the mineral fibre-based absorbent material has a volumetric mass of between 15 and 200 kg/m³ and, preferably, of between 20 and 60 kg/m³ and a thickness of between 10 and 250 mm and, preferably, of between 20 and 100 mm.

8. Sound absorbing panel according to Claim 7, **characterized in that** the mineral fibre-based absorbent material has a mass of the order of 24 kg/m³ and a thickness of the order of 50 mm.

9. Sound absorbing panel according to Claim 7 or Claim 8, **characterized in that** the mineral fibre-based absorbent material (1) is delimited over at least one of its faces by a glass staple mat (2, 3).

10. Sound absorbing panel according to Claim 9, **characterized in that** the staple mat (2, 3) has a surfacic mass of between 30 and 90 g/m².

11. Sound absorbing panel according to any one of the preceding Claims, **characterized in that** the surface area which is visible through the perforations is tinted in grey or in a dark colour.

12. Sound absorbing panel according to any one of the preceding Claims, **characterized in that** the perforations are holes with edges which are clearly defined.

13. Sound absorbing panel according to any one of the preceding Claims, **characterized in that** it is rectangular **and in that**, when the perforations are aligned in straight lines, these form an angle of greater than 5° with the sides of the rectangle.
